# EUROPEAN PATENT SPECIFICATION

(11) **EP 3 683 098 B1**
(45) Date of publication and mention of the grant of the patent: **02.03.2022**
(21) Application number: 19152711.8
(22) Date of filing: 21.01.2019
(51) Int. Cl.: B60R 11/04, B62D 33/06

(54) **MOTOR VEHICLE COMPRISING AN ENVIRONMENTAL SENSING DEVICE AND METHOD FOR ADJUSTING AN ENVIRONMENTAL SENSING DEVICE**
KRAFTFAHRZEUG MIT EINER UMWELTERFASSUNGSVORRICHTUNG UND VERFAHREN ZUR ANPASSUNG EINER UMWELTERFASSUNGSVORRICHTUNG
VÉHICULE AUTOMOBILE COMPRENANT UN DISPOSITIF DE DÉTECTION DE L'ENVIRONNEMENT ET PROCÉDÉ DE RÉGLAGE D'UN DISPOSITIF DE DÉTECTION DE L'ENVIRONNEMENT

(43) Date of publication of application: 22.07.2020
(73) Proprietor: MAN Truck & Bus SE, 80995 München (DE); Scania CV AB, 151 87 Södertälje (SE)
(72) Inventor: Ruch, Florian, 80809 München (DE); Zaindl, Albert, 85302 Gerolsbach (DE); Jutvik, Vilhelm, 124 61 Bandhagen (SE); Eriksson, Joakim, 152 41 Södertälje (SE)
(74) Representative: v. Bezold & Partner Patentanwälte - PartG mbB

(56) References cited:
- EP-A2- 1 584 545
- DE-A1-102011 114 977
- DE-A1-102014 010 577
- DE-A1-102018 000 103
- US-A- 5 044 455

## Description

The invention relates to a motor vehicle comprising an environmental sensing device and an adjustment device for adjusting a field of view of the environmental sensing device. The invention further relates to a method for adjusting an environmental sensing device for monitoring an environment of a motor vehicle.

A motor vehicle may include an environmental sensing device for detecting or monitoring an environment of the motor vehicle. For example, data generated by the environmental sensing device may be provided to driver assistant systems to assist a driver of the motor vehicle in operating the motor vehicle and/or to autonomous driving systems of the motor vehicle if desired.

DE 10 2015 226 502 A1 discloses a lidar scanning device for use in a motor vehicle, comprising a lidar sensor having a predetermined scanning field. The lidar sensor is configured to determine the distance of an object within the scanning field. The lidar scanning device further comprises a pivot device for changing the alignment of the scanning field of the lidar sensor as a function of a driving situation of the motor vehicle.

DE 10 2016 214 143 A1 discloses a motor vehicle with a surroundings sensing device for detecting at least a portion of the ambient area of the motor vehicle. The surroundings sensing device is coupled to a pivoting compensating device. The pivoting compensating device is subjected to static friction which is selected in such a way that an airflow acting on the environmental sensing device does not cause the environmental sensing device to deflect.

DE 10 2011 114977 A1 discloses a device according to the preamble of claim 1, for controlling the driving dynamics of a vehicle with a spring mounted driver's cab, steering angle sensor means for measuring a steering angle, yaw rate sensor means for measuring a yaw rate of the cab, further sensor means for determining a deflection of the driver's cab from a reference position and a control unit for evaluating the signals supplied by the sensor means and for influencing a brake system and a drive of the vehicle in response to these signals.

A problem to be solved by the present disclosure is to provide an alternative and/or improved motor vehicle with an environmental sensing device.

The problem is solved by a motor vehicle according to the independent claim. Preferable embodiments are given in the dependent claims and the description.

The invention provides a motor vehicle, preferably a commercial motor vehicle, more preferably a truck. The motor vehicle comprises an environmental sensing device for monitoring an environment of the motor vehicle, for example in front, behind and/or to a lateral side of the motor vehicle. The motor vehicle further comprises an adjustment device configured to adjust, preferably pivot, a field of view (for example scanning field) of the environmental sensing device depending on a strength (for example speed or rate such as mass flow rate, volumetric flow rate) of an air flow (for example headwind) against the motor vehicle, preferably during travel of the motor vehicle.

The inventive motor vehicle may allow to compensate for changes in position and/or orientation of the environmental sensing device effected by an air flow acting against the motor vehicle. As a result, aerodynamic influences on the field of view may be compensated or reduced. For example, high velocity aerodynamic forces may affect the motor vehicle. More particularly, in case of a truck, an elastically suspended cabin may be pitched or pivoted back up to 2° at 90 km/h. Environmental sensors which are mounted on or at the cabin would therefore be displaced out of their ideal engineered position in case the motor vehicle does not comprise the inventive adjustment device. For example, this aerodynamic effect can be compensated for by pitching or pivoting down the environmental sensing device. Measurements on how far the environmental sensing device may be displaced in pitch or pivot angle may be conducted beforehand to find an optimum.

An adaptive orientation and/or position of environmental sensing device may have the following benefits: better detection of the surrounding environment of the motor vehicle, smaller field of view necessary and therefore cheaper environmental sensing device possible (for example, hardware compensation with actuators instead of software compensation with greater field of view), lesser processing power needed due to less data points in smaller field of view and/or possibility to increase resolution due to smaller field of view.

Preferably, the environmental sensing device includes at least one of a radar device, a lidar device, a camera device and an ultrasonic device.

For example, the adjustment device may be further configured to adjust, preferably pivot, a field of view of the environmental sensing device depending on a strength of an air flow against the motor vehicle during a halt of the motor vehicle.

As used herein, "a cabin" may be a driver cabin for human-operated vehicles, or a sensor and/or computer cabin for fully automated / autonomous motor vehicles.

In some embodiments, the adjustment device is configured to adjust the field of view of the environmental sensing device depending on a strength of an air flow against a front of the motor vehicle, preferably during travel of the motor vehicle. As an example, a strength of the air flow may be measured by measuring a pitch angel of a cabin of the motor vehicle.

In some embodiments, the adjustment device is configured to adjust the field of view of the environmental sensing device to at least partly compensate for a pitch angle change of at least one of the motor vehicle, a cabin of the motor vehicle and the environmental sensing device effected by the air flow against the motor vehicle.

In some embodiments, the adjustment device is configured to pivot the field of view of the environmental sensing device at a ratio of 1° ± 0,5°, preferably 1° ± 0,25°, per 50 km/h wind speed of the air flow.

In some embodiments, the adjustment device is an active adjustment device, a passive adjustment device, or a combination thereof.

In some embodiments, the adjustment device is configured to pivot the field of view of the environmental sensing device forward or downward in case the air flow against the motor vehicle increases, for example during acceleration of the motor vehicle and/or due to an increasing headwind. Additionally or alternatively, the adjustment device is configured to pivot the field of view of the environmental sensing device backward or upward in case the air flow against the motor vehicle decreases, for example during deceleration of the motor vehicle and/or due to a decreasing headwind.

In some embodiments, the motor vehicle further comprises a frame or chassis and/or a cabin elastically supported by the frame or chassis.

In some embodiments, the environmental sensing device is mounted to the cabin of the motor vehicle, preferably in a fixed manner.

In some embodiments, the adjustment device is configured to adjust the field of view of the environmental sensing device to at least partially, preferably fully, compensate for a pitch angle change of the cabin effected by the air flow against the cabin, for example during travel of the motor vehicle.

In some embodiments, the adjustment device comprises an air suspension device, preferably of a cabin of the motor vehicle (i.e. cabin air suspension). Use of an (already existing) air suspension device may allow an easy implementation of an active adjustment device.

In other embodiments, the air suspension device may be arranged to provide an air suspension for a front axle and/or a rear axle of the motor vehicle.

In some embodiments, the air suspension device is configured to adjust a pitch angle of the cabin to adjust the field of view of the environmental sensing device mounted to the cabin, preferably in a fixed manner, depending on the strength of the air flow against the cabin.

In some embodiments, the air suspension device is configured to maintain a horizontal alignment of the cabin for a plurality of strengths of the air flow against the cabin, preferably to maintain an orientation and/or position of the environmental sensing device mounted to the cabin, more preferably in a fixed manner (for example for wind speeds between 1 Bft (Beaufort) / 1 to 5 km/h and 12 Bft / > 117 km/h).

In some embodiments, the air suspension device is configured to pivot the cabin forward or downward in case the strength of the air flow against the cabin increases to pivot the environmental sensing device forward or downward, preferably to maintain a horizontal alignment of the cabin. Additionally or alternatively, the adjustment device is configured to pivot the cabin backward or upward in case the strength of the air flow against the cabin decreases to pivot the environmental sensing device backward or upward, preferably to maintain a horizontal alignment of the cabin.

In some embodiments, the adjustment device comprises an air deflector arranged to at least partially receive the airflow against the motor vehicle, and/or configured to deflect the received air flow to preferably generate a force which adjust the field of view of the environmental sensing device. Use of an air deflector may allow an easy implementation of a passive adjustment device.

In some embodiments, the air deflector is configured to pivot the environmental sensing device forward or downward preferably in case a strength of the received air flow increases, for example during acceleration of the motor vehicle and/or due to an increasing headwind. Additionally or alternatively, the air deflector is configured to pivot the environmental sensing device backward or upward preferably in case a strength of the received air flow decreases, for example during deceleration of the motor vehicle and/or due to a decreasing headwind.

In some embodiments, the environmental sensing device is pivotably mounted, preferably at a rear portion of the environmental sensing device.

In some embodiments, an elastic element, for example a spring (or a rubber element), supports the environmental sensing device, preferably at a front portion of the environmental sensing device. For example, the elastic element may bias the environmental sensing device in direction to a resting position.

In some embodiments, a damper supports the environmental sensing device, preferably at a front portion of the environmental sensing device, preferably for dampening shocks and/or vibrations.

In some embodiments, the air deflector is fixedly mounted to the environmental sensing device, preferably at a front face, a top face, a bottom face and/or a lateral face of the environmental sensing device.

In some embodiments, the air deflector comprises at least one, preferably curved or straight, air deflector plate configured to deflect the received air flow preferably upward such that a force is generated which urges the air deflector plate and/or the environmental sensing device connected thereto to pivot preferably forward or downward, more preferably depending on a strength of the received air flow and/or against a force of an elastic element, for example a spring.

For example, a magnitude of the generated force may corresponds to a strength of the received air flow.

In some embodiments, the adjustment device is configured to implicitly or explicitly estimate or detect the strength of the air flow based on at least one of a pressure value detected by an air pressure sensor of an air suspension device of the motor vehicle, a displacement value detected by a displacement sensor of an air suspension device of the motor vehicle, a wind speed value detected by a wind speed sensor of the motor vehicle, and a vehicle speed detected by a vehicle speed sensor of the motor vehicle.

The invention is also directed to a method for adjusting an environmental sensing device for monitoring an environment of a motor vehicle. The method comprises adjusting, preferably pivoting, a field of view (for example scanning field) of the environmental sensing device depending on a strength (for example speed or rate such as mass flow rate, volumetric flow rate) of an airflow (for example headwind) against the motor vehicle, preferably during travel of the motor vehicle. The method may offer the same advantages as the motor vehicle as disclosed herein.

In some embodiments, the method may use the environmental sensing device as disclosed herein.

It should be noted that the air flow-dependent adjustment device as disclosed herein may be combined or integrated with further adjustment devices configured to adjust the field of view of the environmental sensing device, such as an adjustment device being dependent on at least one of a vehicle speed, a steering angle and an inclination angle of the motor vehicle.

It should be further noted that environmental sensing device may include a single sensor device or a box/housing including multiple sensor devices.

As used herein, the term "to pivot forward" may particularly refer to a pivot movement in a downward direction with respect to a vertical axis.

As used herein, the term "to pivot backward" may particularly refer to a pivot movement in an upward direction with respect to a vertical axis.

As used herein, the terms "front" and "rear" may particularly refer to a position relative to a forward travel direction of the motor vehicle.

The above described preferred embodiments and features of the invention can be combined as required. Further details and advantages of the invention are described in the following with reference to the attached drawings. In the drawings:
- Fig. 1: shows a schematic side view of a vehicle front portion of a motor vehicle according to the present disclosure;
- Fig. 2: shows a further schematic side view of a vehicle front portion of a motor vehicle according to the present disclosure; and
- Fig. 3: shows a schematic view of an environmental sensing device and an adjustment device according to the present disclosure.

The embodiments shown in the Figs. are at least partially identical. Similar and identical parts are identified with the same reference sign, and for describing those parts it is also referred to the description of the other embodiments and Figs., respectively, to avoid repetitions.

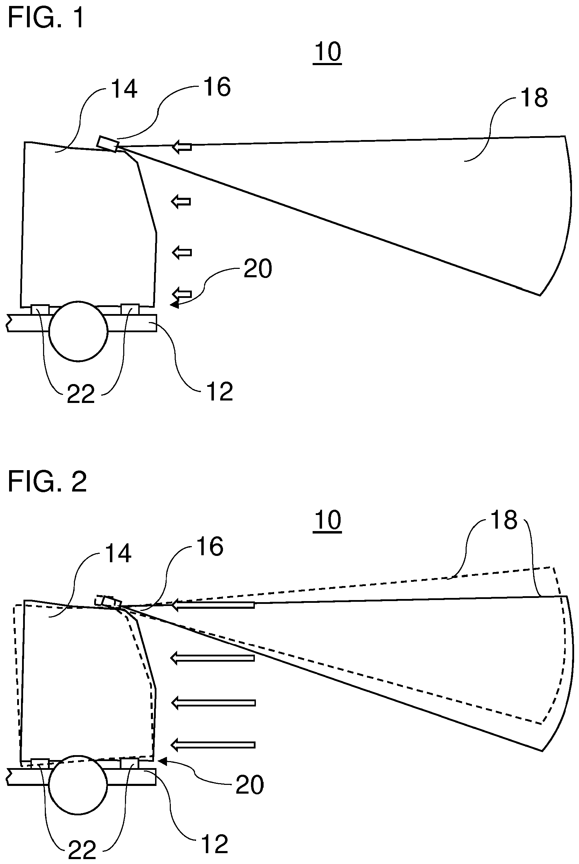

Fig. 1 shows a vehicle front of a motor vehicle 10. As shown in Fig. 1, the motor vehicle 10 may be truck, for example a tractor for a semi-trailer or a truck equipped with an opened or closed loading body such as a charging bay or the like. The motor vehicle 10 may be an on-highway or off-highway vehicle, particularly a transport vehicle.

The motor vehicle 10 comprises a frame or chassis 12, a (driver) cabin 14 and an environmental sensing device 16.

The frame 12 may include a lead frame including two parallel longitudinal beams and a plurality of crossbeams connecting the longitudinal beams with each other. The driver cabin 14 is elastically mounted onto the frame 12, for example via an air suspension device 22. The driver cabin 14 includes a driver's workplace, for example comprising a driver seat, a steering wheel, an accelerator pedal, a brake pedal etc. The environmental sensing device 16 is mounted to the driver cabin 14, for example to a top section of a front face of the driver cabin 14.

The environmental sensing device 16 is configured to monitor an environment of the motor vehicle 10, particularly in front of the motor vehicle 10. For example, the environmental sensing device 16 may include one or more radar sensors, lidar sensors and/or cameras. The motor vehicle 10 may further include one or more (advanced) driver assistance systems, which assist the driver in operating the motor vehicle 10. The driver assistance systems may receive input data from the environmental sensing device 16 to control or regulate certain functions of the motor vehicle 10 if activated. For example, the driver assistance systems may include a cruise control assistant, a lane-keeping assistant, an emergency brake assistant, a blind spot assistant, a distance warning assistant, a traffic sign recognition assistant, a lane-change assistant etc.

The environmental sensing device 16 includes a field of view 18. The environmental sensing device 16 is configured to detect objects in the field of view 18. In the shown embodiment, the field of view 18 is directed to a region in front of the motor vehicle 10.

Turning to Fig. 2, it was found that, particularly during travel of the motor vehicle 10, an air flow against the motor vehicle 10 may displace the field of view 18 in an undesired manner as indicated by dashed lines. The reason may be that the driver cabin 14, which is elastically mounted onto the frame 12, pivots backward under the influence of the air flow against the driver cabin 14. Since the environmental sensing device 16 is mounted to the driver cabin 14, for example in a fixed manner, it at least partially pivots backward together with the driver cabin 14 leading to a displacement of the field of view 18. For example, the driver cabin 14 may pivot backward up to 2° when the motor vehicle 10 travels with a vehicle speed of 90 km/h under the influence of headwind.

To prevent or compensate the undesirable displacement of the field of view 18 effected by the air flow against the motor vehicle 10, the present disclosure suggests that the motor vehicle 10 includes an adjustment device 20 adjusting the field of view 18 depending on a strength of the air flow, particularly depending on a speed, a mass rate and/or a volumetric rate of the air flow against the motor vehicle 10.

The adjustment device 20 may be configured to adjust the field of view 18 of the environmental sensing device 16 depending on the air flow against a front of the motor vehicle 10 during travel of the motor vehicle 10. Additionally or alternatively, adjustment device 20 may be configured to adjust the field of view 18 of the environmental sensing device 16 depending on a crosswind or a tailwind against at least one of the motor vehicle 10, the driver cabin 14 and the environmental sensing device 16.

The adjustment device 20 may be specifically designated for adjusting the field of view 18 of the environmental sensing device 16. However, it may be also possible that the adjustment device 20 is at least in part provided by an (already existing) system of the motor vehicle 10, which has additional (main) functions.

The adjustment device 20 is configured to pivot the field of view 18 of the environmental sensing device 16 forward in case the air flow against the front of the driver cabin 14 increases during travel of the motor vehicle 10, for example during acceleration of the motor vehicle. On the other hand, the adjustment device 20 is configured to pivot the field of view 18 of the environmental sensing device 16 backward in case the air flow against the front of the driver cabin 14 decreases during travel of the motor vehicle 10, for example during deceleration of the motor vehicle 10. Particularly, the adjustment device 20 is configured to adjust the field of view 18 of the environmental sensing device 16 to at least partially compensate for a change in pitch angle of the driver cabin 14 effected by the air flow against the driver cabin 14.

As an example, the adjustment device 20 may be configured to pivot the field of view 18 of the environmental sensing device 16 at a ratio of 1° ± 0,5°, preferably 1° ± 0,25°, per 50 km/h wind speed against the motor vehicle 10. For example, the adjustment device 20 pivots the field of view 18 of the environmental sensing device 16 2° forward if the wind speed increases by 100 km/h, or the adjustment device 20 pivots the field of view 18 of the environmental sensing device 16 1° backward if the wind speed decreases by 50 km/h. It may be also possible to use a non-linear relationship, particularly considering that air resistance increases quadratic to velocity. Look-up tables generated from measurements and/or simulations may be also used to associate a driving speed or wind speed with a respective pivot position of the field of view 18.

The adjustment device 20 may be an active adjustment device including actuators for directly or indirectly adjusting the field of view 18, a passive adjustment device for passively adjusting the field of view 18, or a combination thereof.

The active adjustment device may include any kind and any number of active actuators. For example, electric servo motors, electro-magnetic actuators, piezo actuators, hydraulic actuators, pneumatic actuators may be provided. The actuator(s) may directly or indirectly translate or rotate (pivot) the environmental sensing device 16 and/or the field of view 18. The active adjustment device may be mounted to or integrated in the environmental sensing device 16, or any other place of the motor vehicle 10 allowing to adjust the field of view 18.

In case of an active adjustment device, the same may include or may be connected to a sensor device for directly detecting a strength of the air flow against the motor vehicle 10 and/or may indirectly detect or estimate a strength of the air flow against the motor vehicle 10, preferably by monitoring components of the motor vehicle 10 affected by the air flow against the motor vehicle 10.

The passive adjustment device may include a passive configuration which passively adjusts the field of view 18 particularly under the influence of the air flow against the motor vehicle 10. For example, the passive adjustment device may include one or more spring elements, damper elements and air deflector plates.

For example, the motor vehicle 10 may include the air suspension device 22. The adjustment device 20 may include or may be embodied as the air suspension device 22. The air suspension device 22 elastically mounts the driver cabin 14 onto the frame 12. The air suspension device 22 may include one or more pneumatic actuators, for example pneumatic cylinders. The pneumatic actuators may be mounted between the frame 12 and a front portion of the driver cabin 14, and/or between the frame 12 and a rear portion of the driver cabin 14. The air suspension device 22 is configured for dampening shocks and vibrations. The air suspension device 22 is configured to adjust a pitch angle of the driver cabin 14, for example by supplying pressurized air to pneumatic actuators mounted to a rear portion of the driver cabin 14.

Additionally, according to an exemplary embodiment of the present disclosure as depicted in Fig. 2, the adjustment device 20 comprises the air suspension device 22. Particularly, the air suspension device 22 is actuated to prevent that the air flow against the driver cabin 14 pivots the driver cabin 14 backward (dashed lines vs. solid lines in Fig. 2). For example, pneumatic actuators of the air suspension device 22 mounted to a rear portion of the driver cabin 14 may be supplied with additional pressurized air. Additionally or alternatively, pneumatic actuators of the air suspension device 22 mounted to a front portion of the driver cabin 14 may drain pressurized air. The air suspension device 22 may be configured to maintain a horizontal alignment of the driver cabin 14 against the influence of the air flow acting onto the driver cabin 14.

Specifically, the air suspension device 22 pivots the driver cabin 14 forward when a strength of the air flow against a front of the driver cabin 14 increases, for example as a result of an acceleration of the motor vehicle 10 and/or as a result of an increased headwind, preferably to maintain a horizontal alignment of the driver cabin 14. On the other hand, the air suspension device 22 pivots the driver cabin 14 backward when a strength of the air flow against the front of the driver cabin 14 decreases, for example as a result of an deceleration of the motor vehicle 10 and/or as a result of a decreased headwind, preferably to maintain a horizontal alignment of the driver cabin 14.

For example, the air suspension device 22 may include one or more air pressure sensors for detecting an air pressure of one or more pneumatic actuators of the air suspension device 22 as an input value for actively controlling a pivot angel of the driver cabin 14 and thus the environmental sensing device 16. Additionally or alternatively, the air suspension device 22 may include one or more displacement sensors for detecting a displacement, particularly a pivotal displacement, of the driver cabin 14 under the influence of the air flow against the driver cabin 14 as an input value for actively controlling the orientation. In other words, the strength of the air flow against the driver cabin 14 may be indirectly detected by monitoring an air pressure change and/or a displacement of the driver cabin 14.

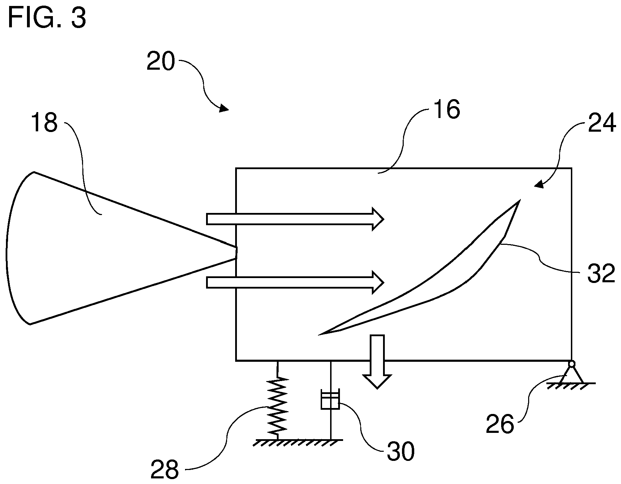

Fig. 3 shows another example of the adjustment device 20. Here, the adjustment device 20 is configured as a passive adjustment device mounted to the environmental sensing device 16.

Particularly, the adjustment device 20 includes an air deflector 24 and a pivot joint 26. The adjustment device 20 may further include a damper 30 and an elastic element such as a rubber element or a spring 28.

The environmental sensing device 16 is pivotably mounted to the motor vehicle 10, for example the driver cabin 14, by the pivot joint 26. Particularly, the pivot joint 26 may be connected to a rear portion of the environmental sensing device 16 with respect to a forward direction of the motor vehicle 10. The pivot joint 26 is configured to pivot the environmental sensing device 16 forward (downward) or backward (upward).

The air deflector 24 is arranged to receive the air flow against the motor vehicle 10. The air deflector 24 is mechanically connected to the environmental sensing device 16 such that a change in position and/or orientation of the air deflector 24 is transmitted at least in part to the environmental sensing device 16. In other words, the air deflector 24 and the environmental sensing device 16 are connected to each other to move together at least in part. For example, the air deflector 24 may be rigidly mounted to a housing or base of the environmental sensing device 16.

The air deflector 24 is configured to deflect the received air flow such that a force is generated which effects a change in position and/or orientation of the air deflector 24 and thus the environmental sensing device 16. A magnitude of the force corresponds to a strength / ratio of the received air flow. The change in position and/or orientation of the air deflector 24 is possible due to the presence of the pivot joint 26 supporting the environmental sensing device 16.

For example, the air deflector 24 may include one or more air deflector plates 32. The air deflector plate(s) 32 may be mounted to one or more outer faces of the environmental sensing device 16. For example, the air deflector plates 32 may be mounted to a front face, a bottom face, a top face or a lateral face of the environmental sensing device 16. In the shown embodiment of Fig. 3, the air deflector plate 32 is mounted to a lateral face of the environmental sensing device 16.

The air deflector plate 32 may be curved or straight to deflect the air flow upward such that a force is generated which urges the air deflector plate 32 and environmental sensing device 16 connected thereto downwards. The air deflector plate 32 and the environmental sensing device 16 pivot forward or downward about a pivot axis of the pivot joint 26 against a spring force of the spring 28. In case the strength of the received air flow decreases, the force generated due to the deflection of the received air flow decreases as well. The spring 28 pivots the environmental sensing device 16 and the air deflector plate 32 backward or upward about the pivot axis of the pivot joint 26. The damper 30 may function to dampen movements or reduce effects of sudden changes in wind speed, shocks and vibrations of the environmental sensing device 16.

It is noted that in another aspect, the present disclosure also relates to a method for adjusting the environmental sensing device 16. The method comprises adjusting, preferably pivoting (for example forward (downward) or backward (upward)), the field of view 18 of the environmental sensing device 16 depending on the strength of the air flow against the motor vehicle 10, preferably during travel of the motor vehicle 10.

### List of reference signs

- 10: Motor vehicle
- 12: Frame
- 14: Driver cabin
- 16: Environmental sensing device
- 18: Field of view
- 20: Adjustment device
- 22: Air suspension device
- 24: Air deflector
- 26: Pivot joint
- 28: Spring
- 30: Damper
- 32: Air deflector plate

## Claims

1. A motor vehicle (10), preferably a commercial motor vehicle, more preferably a truck, comprising:
an environmental sensing device (16) for monitoring an environment of the motor vehicle (10); **characterized by**
an adjustment device (20) configured to adjust, preferably pivot, a field of view (18) of the environmental sensing device (16) depending on a strength of an air flow against the motor vehicle (10), preferably during travel of the motor vehicle (10).

2. The motor vehicle (10) of claim 1, wherein:
the adjustment device (20) is configured to adjust the field of view (18) of the environmental sensing device (16) depending on a strength of an air flow against a front of the motor vehicle (10), preferably during travel of the motor vehicle (10); and/or
the adjustment device (20) is configured to adjust the field of view (18) of the environmental sensing device (16) to at least partly compensate for a pitch angle change of at least one of the motor vehicle (10), a cabin (14) of the motor vehicle (10) and the environmental sensing device (16) effected by the air flow against the motor vehicle (10).

3. The motor vehicle (10) of claim 1 or claim 2, wherein:
the adjustment device (20) is configured to pivot the field of view (18) of the environmental sensing device (16) at a ratio of 1° ± 0,5°, preferably 1° ± 0,25°, per 50 km/h wind speed of the air flow.

4. The motor vehicle (10) of any one of the preceding claims, wherein:
the adjustment device (20) is an active adjustment device, a passive adjustment device, or a combination thereof.

5. The motor vehicle (10) of any one of the preceding claims, wherein:
the adjustment device (20) is configured to pivot the field of view (18) of the environmental sensing device (16) forward or downward in case the air flow against the motor vehicle (10) increases, for example during acceleration of the motor vehicle (10) and/or due to an increasing headwind; and/or
the adjustment device (20) is configured to pivot the field of view (18) of the environmental sensing device (16) backward or upward in case the air flow against the motor vehicle (10) decreases, for example during deceleration of the motor vehicle (10) and/or due to a decreasing headwind.

6. The motor vehicle (10) of any one of the preceding claims, wherein:
the motor vehicle (10) further comprises a chassis or frame (12) and a cabin (14) elastically supported by the chassis or frame (12);
the environmental sensing device (16) is mounted to the cabin (14) of the motor vehicle (10), preferably in a fixed manner; and
the adjustment device (20) is configured to adjust the field of view (18) of the environmental sensing device (16) to at least partially, preferably fully, compensate for a pitch angle change of the cabin (14) effected by the air flow against the cabin (14), for example during travel of the motor vehicle (10).

7. The motor vehicle (10) of any one of the preceding claims, wherein:
the adjustment device (20) comprises an air suspension device (22), preferably of a cabin (14) of the motor vehicle (10).

8. The motor vehicle (10) of claim 7, wherein:
the air suspension device (22) is configured to adjust a pitch angle of the cabin (14) to adjust the field of view (18) of the environmental sensing device (16) mounted to the cabin (14), preferably in a fixed manner, depending on the strength of the air flow against the cabin (14); and/or
the air suspension device (22) is configured to maintain a horizontal alignment of the cabin (14) for a plurality of strengths of the air flow against the cabin (14), preferably to maintain an orientation and/or position of the environmental sensing device (16) mounted to the cabin (14), more preferably in a fixed manner.

9. The motor vehicle (10) of claim 7 or claim 8, wherein:
the air suspension device (22) is configured to pivot the cabin (14) forward or downward in case the strength of the air flow against the cabin (14) increases to pivot the environmental sensing device (16) forward or downward; and/or
the adjustment device (20) is configured to pivot the cabin (14) backward or upward in case the strength of the air flow against the cabin (14) decreases to pivot the environmental sensing device (16) backward or upward.

10. The motor vehicle (10) of any one of the preceding claims, wherein:
the adjustment device (20) comprises an air deflector (24) arranged to at least partially receive the air flow against the motor vehicle (10), and configured to deflect the received air flow to generate a force which adjust the field of view (18) of the environmental sensing device (16).

11. The motor vehicle (10) of claim 10, wherein:
the air deflector (24) is configured to pivot the environmental sensing device (16) forward or downward in case a strength of the received air flow increases, for example during acceleration of the motor vehicle (10) and/or due to an increasing headwind; and/or
the air deflector (24) is configured to pivot the environmental sensing device (16) backward or upward in case a strength of the received air flow decreases, for example during deceleration of the motor vehicle (10) and/or due to a decreasing headwind.

12. The motor vehicle (10) of claim 10 or claim 11, wherein:
the environmental sensing device (16) is pivotably mounted, preferably at a rear portion of the environmental sensing device (16); and/or
an elastic element, for example a spring (28), supports the environmental sensing device (16), preferably at a front portion of the environmental sensing device (16); and/or
a damper (30) supports the environmental sensing device (16), preferably at a front portion of the environmental sensing device (16); and/or
the air deflector (24) is fixedly mounted the environmental sensing device (16), preferably at a front face, a top face, a bottom face and/or a lateral face of the environmental sensing device (16).

13. The motor vehicle (10) of any one of claims 10 to 12, wherein:
the air deflector (24) comprises at least one, preferably curved or straight, air deflector plate (32) configured to defect the received air flow upward such that a force is generated which urges the air deflector (24) and the environmental sensing device (16) connected thereto to pivot forward or downward, preferably depending on a strength of the received air flow and/or against a force of an elastic element, for example a spring (28).

14. The motor vehicle (10) of any one of the preceding claims, wherein the adjustment device (20) is configured to implicitly or explicitly estimate or detect the strength of the air flow based on at least one of:
a pressure value detect by an air pressure sensor of an air suspension device (22) of the motor vehicle (10);
a displacement value detected by a displacement sensor of an air suspension device (22) of the motor vehicle (10);
a wind speed value detected by a wind speed sensor of the motor vehicle (10); and
a vehicle speed detected by a vehicle speed sensor of the motor vehicle (10).

15. A method for adjusting an environmental sensing device (16) for monitoring an environment of a motor vehicle (10) according to any one of the preceding claims, comprising:
adjusting, preferably pivoting, a field of view (18) of the environmental sensing device (16) depending on a strength of an air flow against the motor vehicle (10), preferably during travel of the motor vehicle (10).

## Patentansprüche

1. Kraftfahrzeug (10), vorzugsweise ein Nutzkraftfahrzeug, weiter bevorzugt ein Lastkraftwagen, umfassend:
eine Umgebungserfassungsvorrichtung (16) zum Überwachen einer Umgebung des Kraftfahrzeugs (10); **gekennzeichnet durch**
eine Einstellungsvorrichtung (20), die dazu ausgelegt ist, ein Sichtfeld (18) der Umgebungserfassungsvorrichtung (16) in Abhängigkeit von einer Stärke einer Luftströmung gegen das Kraftfahrzeug (10), vorzugsweise während einer Fahrt des Kraftfahrzeugs (10), einzustellen, vorzugsweise zu schwenken.

2. Kraftfahrzeug (10) nach Anspruch 1, wobei:
die Einstellungsvorrichtung (20) dazu ausgelegt ist, das Sichtfeld (18) der Umgebungserfassungsvorrichtung (16) in Abhängigkeit von einer Stärke einer Luftströmung gegen eine Front des Kraftfahrzeugs (10), vorzugsweise während einer Fahrt des Kraftfahrzeugs (10), einzustellen; und/oder
die Einstellungsvorrichtung (20) dazu ausgelegt ist, das Sichtfeld (18) der Umgebungserfassungsvorrichtung (16) so einzustellen, dass eine Nickwinkeländerung mindestens eines des Kraftfahrzeugs (10), einer Kabine (14) des Kraftfahrzeugs (10) und der Umgebungserfassungsvorrichtung (16), die durch die Luftströmung gegen das Kraftfahrzeug (10) bewirkt wird, zumindest teilweise kompensiert wird.

3. Kraftfahrzeug (10) nach Anspruch 1 oder Anspruch 2, wobei:
die Einstellungsvorrichtung (20) dazu ausgelegt ist, das Sichtfeld (18) der Umgebungserfassungsvorrichtung (16) in einem Verhältnis von 1° ± 0,5°, vorzugsweise 1° ± 0,25°, pro 50 km/h Windgeschwindigkeit der Luftströmung zu schwenken.

4. Kraftfahrzeug (10) nach einem der vorhergehenden Ansprüche, wobei:
die Einstellungsvorrichtung (20) eine aktive Einstellungsvorrichtung, eine passive Einstellungsvorrichtung oder eine Kombination davon ist.

5. Kraftfahrzeug (10) nach einem der vorhergehenden Ansprüche, wobei:
die Einstellungsvorrichtung (20) dazu ausgelegt ist, das Sichtfeld (18) der Umgebungserfassungsvorrichtung (16) nach vorn oder nach unten zu schwenken, falls die Luftströmung gegen das Kraftfahrzeug (10) zunimmt, zum Beispiel während einer Beschleunigung des Kraftfahrzeugs (10) und/oder aufgrund eines zunehmenden Gegenwinds; und/oder
die Einstellungsvorrichtung (20) dazu ausgelegt ist, das Sichtfeld (18) der Umgebungserfassungsvorrichtung (16) nach hinten oder nach oben zu schwenken, falls die Luftströmung gegen das Kraftfahrzeug (10) abnimmt, zum Beispiel während einer Verlangsamung des Kraftfahrzeugs (10) und/oder aufgrund eines abnehmenden Gegenwinds.

6. Kraftfahrzeug (10) nach einem der vorhergehenden Ansprüche, wobei:
das Kraftfahrzeug (10) ferner ein Chassis oder einen Rahmen (12) und eine Kabine (14), die durch das Chassis oder den Rahmen (12) elastisch gelagert ist, umfasst;
die Umgebungserfassungsvorrichtung (16) an der Kabine (14) des Kraftfahrzeugs (10), vorzugsweise auf eine feste Weise, montiert ist; und
die Einstellungsvorrichtung (20) dazu ausgelegt ist, das Sichtfeld (18) der Umgebungserfassungsvorrichtung (16) so einzustellen, dass eine Nickwinkeländerung der Kabine (14), die durch die Luftströmung gegen die Kabine (14), zum Beispiel während einer Fahrt des Kraftfahrzeugs (10), bewirkt wird, zumindest teilweise, vorzugsweise vollständig, kompensiert wird.

7. Kraftfahrzeug (10) nach einem der vorhergehenden Ansprüche, wobei:
die Einstellungsvorrichtung (20) eine Luftfederungsvorrichtung (22), vorzugsweise einer Kabine (14) des Kraftfahrzeugs (10), umfasst.

8. Kraftfahrzeug (10) nach Anspruch 7, wobei:
die Luftfederungsvorrichtung (22) dazu ausgelegt ist, einen Nickwinkel der Kabine (14) einzustellen, um das Sichtfeld (18) der Umgebungserfassungsvorrichtung (16), die an der Kabine (14), vorzugsweise auf eine feste Weise, montiert ist, in Abhängigkeit von der Stärke der Luftströmung gegen die Kabine (14) einzustellen; und/oder
die Luftfederungsvorrichtung (22) dazu ausgelegt ist, eine horizontale Ausrichtung der Kabine (14) für eine Mehrzahl von Stärken der Luftströmung gegen die Kabine (14) aufrechtzuerhalten, vorzugsweise eine Orientierung und/oder Position der Umgebungserfassungsvorrichtung (16), die an der Kabine (14), weiter bevorzugt auf eine feste Weise, montiert ist, aufrechtzuerhalten.

9. Kraftfahrzeug (10) nach Anspruch 7 oder Anspruch 8, wobei:
die Luftfederungsvorrichtung (22) dazu ausgelegt ist, die Kabine (14) nach vorn oder nach unten zu schwenken, falls die Stärke der Luftströmung gegen die Kabine (14) zunimmt, um die Umgebungserfassungsvorrichtung (16) nach vorn oder nach unten zu schwenken; und/oder
die Einstellungsvorrichtung (20) dazu ausgelegt ist, die Kabine (14) nach hinten oder nach oben zu schwenken, falls die Stärke der Luftströmung gegen die Kabine (14) abnimmt, um die Umgebungserfassungsvorrichtung (16) nach hinten oder nach oben zu schwenken.

10. Kraftfahrzeug (10) nach einem der vorhergehenden Ansprüche, wobei:
die Einstellungsvorrichtung (20) eine Luftablenkvorrichtung (24) umfasst, die dazu angeordnet ist, zumindest teilweise die Luftströmung gegen das Kraftfahrzeug (10) aufzunehmen, und dazu ausgelegt ist, die aufgenommene Luftströmung abzulenken, um eine Kraft zu erzeugen, die das Sichtfeld (18) der Umgebungserfassungsvorrichtung (16) einstellt.

11. Kraftfahrzeug (10) nach Anspruch 10, wobei:
die Luftablenkvorrichtung (24) dazu ausgelegt ist, die Umgebungserfassungsvorrichtung (16) nach vorn oder nach unten zu schwenken, falls eine Stärke der aufgenommenen Luftströmung zunimmt, zum Beispiel während einer Beschleunigung des Kraftfahrzeugs (10) und/oder aufgrund eines zunehmenden Gegenwinds; und/oder
die Luftablenkvorrichtung (24) dazu ausgelegt ist, die Umgebungserfassungsvorrichtung (16) nach hinten oder nach oben zu schwenken, falls eine Stärke der aufgenommenen Luftströmung abnimmt, zum Beispiel während einer Verlangsamung des Kraftfahrzeugs (10) und/oder aufgrund eines abnehmenden Gegenwinds.

12. Kraftfahrzeug (10) nach Anspruch 10 oder Anspruch 11, wobei:
die Umgebungserfassungsvorrichtung (16) schwenkbar montiert ist, vorzugsweise an einem hinteren Abschnitt der Umgebungserfassungsvorrichtung (16); und/oder
ein elastisches Element, zum Beispiel eine Feder (28) die Umgebungserfassungsvorrichtung (16) lagert, vorzugsweise an einem vorderen Abschnitt der Umgebungserfassungsvorrichtung (16); und/oder
ein Dämpfer (30) die Umgebungserfassungsvorrichtung (16) lagert, vorzugsweise an einem vorderen Abschnitt der Umgebungserfassungsvorrichtung (16); und/oder
die Luftablenkvorrichtung (24) fest an der Umgebungserfassungsvorrichtung (16) montiert ist, vorzugsweise an einer vorderen Fläche, einer oberen Fläche, einer unteren Fläche und/oder einer seitlichen Fläche der Umgebungserfassungsvorrichtung (16).

13. Kraftfahrzeug (10) nach einem der Ansprüche 10 bis 12, wobei:
die Luftablenkvorrichtung (24) mindestens eine, vorzugsweise gebogene oder gerade, Luftablenkplatte (32) umfasst, die dazu ausgelegt ist, die aufgenommene Luftströmung nach oben abzulenken, so dass eine Kraft erzeugt wird, die die Luftablenkvorrichtung (24) und die damit verbundene Umgebungserfassungsvorrichtung (16) dazu drängt, nach vorn oder nach unten zu schwenken, vorzugsweise in Abhängigkeit von einer Stärke der aufgenommenen Luftströmung und/oder gegen eine Kraft eines elastischen Elements, zum Beispiel einer Feder (28) .

14. Kraftfahrzeug (10) nach einem der vorhergehenden Ansprüche, wobei die Einstellungsvorrichtung (20) dazu ausgelegt ist, implizit oder explizit die Stärke der Luftströmung basierend auf mindestens einem von Folgendem zu schätzen:
einem Druckwert, der durch einen Luftdrucksensor einer Luftfederungsvorrichtung (22) des Kraftfahrzeugs (10) detektiert wird;
einem Verschiebungswert, der durch einen Verschiebungssensor einer Luftfederungsvorrichtung (22) des Kraftfahrzeugs (10) detektiert wird;
einem Windgeschwindigkeitswert, der durch einen Windgeschwindigkeitssensor des Kraftfahrzeugs (10) detektiert wird; und
einer Fahrzeuggeschwindigkeit, die durch einen Fahrzeuggeschwindigkeitssensor des Kraftfahrzeugs (10) detektiert wird.

15. Verfahren zum Einstellen einer Umgebungserfassungsvorrichtung (16) zum Überwachen einer Umgebung eines Kraftfahrzeugs (10) nach einem der vorhergehenden Ansprüche, umfassend:
Einstellen, vorzugsweise Schwenken, eines Sichtfelds (18) der Umgebungserfassungsvorrichtung (16) in Abhängigkeit von einer Stärke einer Luftströmung gegen das Kraftfahrzeug (10), vorzugsweise während einer Fahrt des Kraftfahrzeugs (10).

## Revendications

1. Véhicule à moteur (10), de préférence véhicule à moteur commercial, de façon davantage préférée camion, comprenant :
un dispositif de détection d'environnement (16) pour surveiller un environnement du véhicule à moteur (10) ; **caractérisé par**
un dispositif d'ajustement (20) configuré pour ajuster, de préférence faire pivoter, un champ de vue (18) du dispositif de détection d'environnement (16) en fonction d'une résistance d'un écoulement d'air contre le véhicule à moteur (10), de préférence durant le mouvement du véhicule à moteur (10).

2. Véhicule à moteur (10) selon la revendication 1, dans lequel :
le dispositif d'ajustement (20) est configuré pour ajuster le champ de vue (18) du dispositif de détection d'environnement (16) en fonction d'une résistance d'un écoulement d'air contre un avant du véhicule à moteur (10), de préférence durant le mouvement du véhicule à moteur (10) ; et/ou
le dispositif d'ajustement (20) est configuré pour ajuster le champ de vue (18) du dispositif de détection d'environnement (16) pour au moins partiellement compenser un changement d'angle d'inclinaison d'au moins un du véhicule à moteur (10), d'une cabine (14) du véhicule à moteur (10) et du dispositif de détection d'environnement (16) effectué par l'écoulement d'air contre le véhicule à moteur (10).

3. Véhicule à moteur (10) selon la revendication 1 ou la revendication 2, dans lequel :
le dispositif d'ajustement (20) est configuré pour faire pivoter le champ de vue (18) du dispositif de détection d'environnement (16) à un rapport de 1° ± 0,5°, de préférence 1° ± 0,25°, par 50 km/h de vitesse de vent de l'écoulement d'air.

4. Véhicule à moteur (10) selon l'une quelconque des revendications précédentes, dans lequel :
le dispositif d'ajustement (20) est un dispositif d'ajustement actif, un dispositif d'ajustement passif, ou une association de ceux-ci.

5. Véhicule à moteur (10) selon l'une quelconque des revendications précédentes, dans lequel :
le dispositif d'ajustement (20) est configuré pour faire pivoter le champ de vue (18) du dispositif de détection d'environnement (16) vers l'avant ou vers le bas au cas où l'écoulement d'air contre le véhicule à moteur (10) augmente, par exemple durant l'accélération du véhicule à moteur (10) et/ou en raison d'un vent de face croissant ; et/ou
le dispositif d'ajustement (20) est configuré pour faire pivoter le champ de vue (18) du dispositif de détection d'environnement (16) vers l'arrière ou vers le haut au cas où l'écoulement d'air contre le véhicule à moteur (10) diminue, par exemple durant le ralentissement du véhicule à moteur (10) et/ou en raison d'un vent de face décroissant.

6. Véhicule à moteur (10) selon l'une quelconque des revendications précédentes, dans lequel :
le véhicule à moteur (10) comprend en outre un châssis ou cadre (12) et une cabine (14) élastiquement supportée par le châssis ou cadre (12) ;
le dispositif de détection d'environnement (16) est monté sur la cabine (14) du véhicule à moteur (10), de préférence de manière fixe ; et
le dispositif d'ajustement (20) est configuré pour ajuster le champ de vue (18) du dispositif de détection d'environnement (16) pour compenser au moins partiellement, de préférence complètement, un changement d'angle d'inclinaison de la cabine (14) effectué par l'écoulement d'air contre la cabine (14), par exemple durant le mouvement du véhicule à moteur (10).

7. Véhicule à moteur (10) selon l'une quelconque des revendications précédentes, dans lequel :
le dispositif d'ajustement (20) comprend un dispositif de suspension pneumatique (22), de préférence d'une cabine (14) du véhicule à moteur (10).

8. Véhicule à moteur (10) selon la revendication 7, dans lequel :
le dispositif de suspension pneumatique (22) est configuré pour ajuster un angle d'inclinaison de la cabine (14) pour ajuster le champ de vue (18) du dispositif de détection d'environnement (16) monté sur la cabine (14), de préférence de manière fixe, en fonction de la résistance de l'écoulement d'air contre la cabine (14) ; et/ou
le dispositif de suspension pneumatique (22) est configuré pour maintenir un alignement horizontal de la cabine (14) pour une pluralité de résistances de l'écoulement d'air contre la cabine (14), de préférence pour maintenir une orientation et/ou position du dispositif de détection d'environnement (16) monté sur la cabine (14), de façon davantage préférée de manière fixe.

9. Véhicule à moteur (10) selon la revendication 7 ou la revendication 8, dans lequel :
le dispositif de suspension pneumatique (22) est configuré pour faire pivoter la cabine (14) vers l'avant ou vers le bas au cas où la résistance de l'écoulement d'air contre la cabine (14) augmente, pour faire pivoter le dispositif de détection d'environnement (16) vers l'avant ou vers le bas ; et/ou
le dispositif d'ajustement (20) est configuré pour faire pivoter la cabine (14) vers l'arrière ou vers le haut au cas où la résistance de l'écoulement d'air contre la cabine (14) diminue, pour faire pivoter le dispositif de détection d'environnement (16) vers l'arrière ou vers le haut.

10. Véhicule à moteur (10) selon l'une quelconque des revendications précédentes, dans lequel :
le dispositif d'ajustement (20) comprend un déflecteur d'air (24) agencé pour au moins partiellement recevoir l'écoulement d'air contre le véhicule à moteur (10), et configuré pour défléchir l'écoulement d'air reçu pour générer une force qui ajuste le champ de vue (18) du dispositif de détection d'environnement (16).

11. Véhicule à moteur (10) selon la revendication 10, dans lequel :
le déflecteur d'air (24) est configuré pour faire pivoter le dispositif de détection d'environnement (16) vers l'avant ou vers le bas au cas où une résistance de l'écoulement d'air reçu augmente, par exemple durant l'accélération du véhicule à moteur (10) et/ou en raison d'un vent de face croissant ; et/ou
le déflecteur d'air (24) est configuré pour faire pivoter le dispositif de détection d'environnement (16) vers l'arrière ou vers le haut au cas où une résistance de l'écoulement d'air reçu diminue, par exemple durant le ralentissement du véhicule à moteur (10) et/ou en raison d'un vent de face décroissant.

12. Véhicule à moteur (10) selon la revendication 10 ou la revendication 11, dans lequel :
le dispositif de détection d'environnement (16) est monté de façon pivotante, de préférence à une partie arrière du dispositif de détection d'environnement (16) ; et/ou
un élément élastique, par exemple un ressort (28), supporte le dispositif de détection d'environnement (16), de préférence à une partie avant du dispositif de détection d'environnement (16) ; et/ou
un amortisseur (30) supporte le dispositif de détection d'environnement (16), de préférence à une partie avant du dispositif de détection d'environnement (16) ; et/ou
le déflecteur d'air (24) est monté de façon fixe sur le dispositif de détection d'environnement (16), de préférence sur une face avant, une face supérieure, une face inférieure et/ou une face latérale du dispositif de détection d'environnement (16).

13. Véhicule à moteur (10) selon l'une quelconque des revendications 10 à 12, dans lequel :
le déflecteur d'air (24) comprend au moins une plaque de déflecteur d'air plate (32), de préférence incurvée ou droite, configurée pour effectuer la défléchir de l'écoulement d'air reçu vers le haut de telle sorte qu'une force soit générée qui pousse le déflecteur d'air (24) et le dispositif de détection d'environnement (16) raccordé à celui-ci à pivoter vers l'avant ou vers le bas, de préférence en fonction d'une résistance de l'écoulement d'air reçu et/ou contre une force d'un élément élastique, par exemple d'un ressort (28).

14. Véhicule à moteur (10) selon l'une quelconque des revendications précédentes, dans lequel le dispositif d'ajustement (20) est configuré pour estimer ou détecter implicitement ou explicitement la résistance de l'écoulement d'air sur la base d'au moins une de :
une valeur de pression détectée par un capteur de pression d'air d'un dispositif de suspension pneumatique (22) du véhicule à moteur (10) ;
une valeur de déplacement détectée par un capteur de déplacement d'un dispositif de suspension pneumatique (22) du véhicule à moteur (10) ;
une valeur de vitesse de vent détectée par un capteur de vitesse de vent du véhicule à moteur (10) ; et
une valeur de vitesse de véhicule détectée par un capteur de vitesse de véhicule du véhicule à moteur (10).

15. Procédé pour ajuster un dispositif de détection d'environnement (16) pour surveiller un environnement d'un véhicule à moteur (10) selon l'une quelconque des revendications précédentes, comprenant :
l'ajustement, de préférence le pivotement, d'un champ de vue (18) du dispositif de détection d'environnement (16) en fonction d'une résistance d'un écoulement d'air contre le véhicule à moteur (10), de préférence durant le mouvement du véhicule à moteur (10).
